(19) **Europäisches Patentamt**

**European Patent Office**

**Office européen des brevets**

(11) **EP 0 853 723 B1**

(12) **EUROPÄISCHE PATENTSCHRIFT**

(45) Veröffentlichungstag und Bekanntmachung des Hinweises auf die Patenterteilung:
**26.01.2000 Patentblatt 2000/04**

(51) Int Cl.$^7$: **F02D 41/36**, F02D 37/02, F02D 17/02

(21) Anmeldenummer: **96923871.6**

(22) Anmeldetag: **24.07.1996**

(86) Internationale Anmeldenummer:
**PCT/DE96/01354**

(87) Internationale Veröffentlichungsnummer:
**WO 97/13973 (17.04.1997 Gazette 1997/17)**

(54) **VERFAHREN UND VORRICHTUNG ZUR STEUERUNG EINER BRENNKRAFTMASCHINE**

PROCESS AND DEVICE FOR CONTROLLING AN INTERNAL COMBUSTION ENGINE

PROCEDE ET DISPOSITIF POUR LA COMMANDE D'UN MOTEUR A COMBUSTION INTERNE

(84) Benannte Vertragsstaaten:
**DE FR IT**

(30) Priorität: **07.10.1995 DE 19537440**
**14.05.1996 DE 19619320**

(43) Veröffentlichungstag der Anmeldung:
**22.07.1998 Patentblatt 1998/30**

(73) Patentinhaber: **ROBERT BOSCH GMBH**
**70442 Stuttgart (DE)**

(72) Erfinder:
• **HESS, Werner**
**D-70499 Stuttgart (DE)**
• **ZHANG, Hong**
**D-93057 Regensburg (DE)**

(56) Entgegenhaltungen:
**DE-A- 4 211 173      DE-A- 4 407 475**
**FR-A- 2 544 390      US-A- 4 276 863**
**US-A- 5 374 224      US-A- 5 408 974**

**Beschreibung**

Stand der Technik

Die Erfindung betrifft ein Verfahren und eine Vorrichtung zur Steuerung einer Brennkraftmaschine gemäß den Oberbegriffen der unabhängigen Patentansprüche.

Aus der EP 27 865 A1 ist bekannt, in vorgegebenen Betriebszuständen des Fahrzeugs bzw. der Brennkraftmaschine wenigstens einen Zylinder einer Mehrzylinderbrennkraftmaschine ab- und zuzuschalten, d.h. die Kraftstoffzufuhr zu diesem Zylinder zu unterbrechen und wiederaufzunehmen. Um das von der Brennkraftmaschine abgegebene Drehmoment im wesentlichen konstant zu halten, wird bei dieser bekannten Anordnung die Stellung einer elektrisch steuerbaren Drosselklappe sprungförmig im Sinne einer Kompensation der durch die Zylinderabschaltung erzeugten Momentenänderung verstellt. Trotz der Änderung der Drosselklappenstellung wird bei dieser bekannten Einrichtung infolge der systembedingten Langsamkeit des Lufteingriffes das Zu- und Abschalten der Zylinder für den Fahrer spürbar sein.

Nach dem US-Patent 5,374,224 wird bei Zuschalten des ersten Zylinders die Füllung und der Zündwinkel nach spät verstellt. Danach wird der Zündwinkel rampenförmig gesteuert auf den optimalen Wert zurückverstellt. Bei der Spätverstellung des Zündwinkels wird ein fester Wert angenommen. Durch diese Maßnahmen wird nicht jeder Übergang zwischen den Betriebsarten zufriedenstellend drehmomentenneutral durchgeführt, da das Drehmoment der Brennkraftmaschine nicht berücksichtigt wird und keine geregelte Kompensation stattfindet.

Die DE 44 07 475 A1 beschreibt eine drehmomentenbasierte Brennkraftmaschinensteuerung, bei welcher die allgemeinen Zusammenhänge zwischen den Leistungsparametern der Brennkraftmaschine und dem Drehmoment dargestellt sind. Maßnahmen zur Verbesserung des Übergangs zwischen Betriebsarten mit unterschiedlichen Zylinderzahlen werden nicht beschrieben.

Es ist Aufgabe der Erfindung, den Übergang in einen Betrieb mit Zylinderabschaltung und umgekehrt derart zu gestalten, daß der Fahrkomfort nicht beeinträchtigt und das von der Brennkraftmaschine abgegebene Motormoment auch im Übergang im wesentlichen konstant gehalten wird.

Diese Aufgabe wird durch die kennzeichnenden Merkmale der unabhängigen Patentansprüche erreicht.

Aus der DE 42 39 711 A1 ist ein Verfahren und eine Vorrichtung zur Steuerung einer Brennkraftmaschine bekannt, bei welchen eine einheitliche Motormomentenschnittstelle eingesetzt wird. Ein über diese Momentenschnittstelle zugeführter Momentenwunsch wird über langsam veränderliche Eingriffe (Füllung) und/oder schnelle Eingriffe (Einspritzausblendung und Zündwinkel) realisiert. Maßnahmen im Zusammenhang mit der Abschaltung einer vorgegebenen Anzahl von Zylindern, vorzugsweise der Abschaltung einer Zylinderbank, im Leerlauf- und Teillastbereich werden nicht angegeben.

Aus der DE 43 34 864 A1 ist ein Steuerverfahren bzw. eine Steuervorrichtung für eine Brennkraftmaschine bekannt, bei welcher durch geeignete Synchronisation von Zündwinkelkorrektur und Einspritzausblendung der Momentensprung bei Zu- bzw. Abschalten eines Zylinders verringert wird.

Vorteile der Erfindung

Beim Ab- und Zuschalten von wenigstens einem Zylinder einer mehrzylindrigen Brennkraftmaschine im Teillastbereich wird durch Koordination des Zündungs-, Füllungs- und Einspritzeingriffs das von der Brennkraftmaschine abgegebene Moment bei unveränderter Pedalstellung und Drehzahl im wesentlichen konstant gehalten. Der Fahrkomfort wird daher durch Zu- und Abschalten der Zylinder nicht beeinträchtigt.

Besonders vorteilhaft ist die Anwendung dieser Vorgehensweise in Verbindung mit der Ab- und Zuschaltung von Zylinderbänken bei Motoren mit großer Zylinderzahl.

Besonders vorteilhaft ist, daß der Fahrerwunsch (das vom Fahrer gewünschte Drehmoment) unabhängig von der Zu- oder Abschaltung von einzelnen Zylindern realisiert wird. Dabei entstehen keine spürbaren Komfortverschlechterungen während des dynamischen Vorgangs.

Besonders vorteilhaft ist, daß externe Eingriffe auf die Brennkraftmaschine (beispielsweise von einer Antriebsschlupfregelung oder einer Getriebesteuerung) ebenfalls unabhängig von der Ab- oder Zuschaltung realisiert werden können.

Weitere Vorteile ergeben sich aus der nachfolgenden Beschreibung von Ausführungsbeispielen bzw. aus den abhängigen Patentansprüchen.

Zeichnung

Die Erfindung wird nachstehend anhand der in der Zeichnung dargestellten Ausführungsformen näher erläutert. Dabei zeigt Figur 1 ein Übersichtsblockschaltbild einer Steuervorrichtung für eine Brennkraftmaschine, während in Figur 2 ein Übersichtsblockschaltbild der erfindungsgemäßen Vorgehensweise dargestellt ist. In den Blockschaltbildern der Figuren 3 bis 9 sind verschiedene Ausführungsbeispiele der erfindungsgemäßen Vorgehensweise dargestellt.

Beschreibung von Ausführungsbeispielen

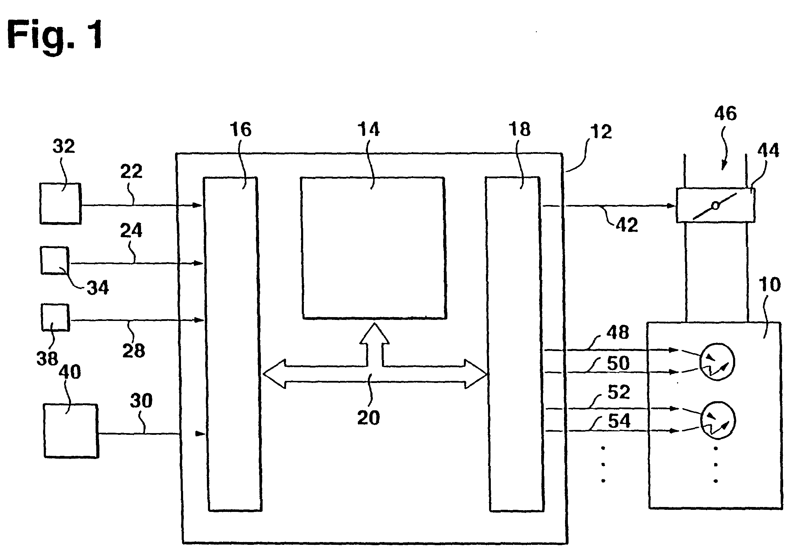

In Figur 1 ist eine Steuervorrichtung für eine mehrzylindrige Brennkraftmaschine 10 dargestellt. Die Steuervorrichtung umfaßt ein elektronisches Steuergerät 12, welches aus wenigstens einem Mikrocomputer 14, einer Eingabe- 16 und einer Ausgabeeinheit 18 besteht. Eingabeeinheit 16, Ausgabeeinheit 18 und Mikrocomputer 14 sind über einen Kommunikationbus 20 zum gegenseitigen Datenaustausch miteinander verknüpft. Der Eingabeeinheit 16 sind die Eingangsleitungen 22, 24, 28 und 30 zugeführt. Die Leitung 22 stammt dabei von einer Meßeinrichtung 32 zur Erfassung der Pedalstellung, die Leitung 24 von einer Meßeinrichtung 34 zur Erfassung der Motordrehzahl, die Leitung 28 von einer Meßeinrichtung 38 zur Erfassung der Motorlast und die Leitung 30 von wenigstens einem weiteren Steuergerät 40, beispielsweise einem Steuergerät zur Antriebsschlupfregelung, zur Getriebesteuerung und/oder zur Motorschleppmomentenregelung. Zur Erfassung der Motorlast sind je nach Ausführungsbeispiel Luftmassen-, Luftmengenmesser oder Drucksensoren zur Erfassung des Saugrohr- oder des Brennraumdrucks vorgesehen. Neben der dargestellten Betriebsgröße erfaßt die Steuereinheit weitere zur Motorsteuerung wesentliche Größen wie die Motortemperatur, Fahrgeschwindigkeit, etc.

An der Ausgabeeinheit 18 ist eine Ausgangsleitung 42 angeschlossen, die auf eine elektrisch betätigbare Drosselklappe 44, die im Luftansaugsystem 46 der Brennkraftmaschine angeordnet ist, führt. Ferner sind Ausgangsleitungen 48, 50, 52, 54, usw. dargestellt, welche mit Stelleinrichtungen zur Kraftstoffzumessung in jeden Zylinder der Brennkraftmaschine 10 verbunden sind bzw. zur Einstellung des Zündwinkels in jedem Zylinder dienen. Grundidee der erfindungsgemäßen Vorgehensweise ist die Realisierung des Motormoments durch Koordination von Füllung, Zündwinkeleinstellung und Einspritzausblendung beim Abschalten bzw. Wiedereinsetzen einer Anzahl von Zylindern, die zur Verbrauchs- und Schadstoffreduzierung beispielsweise dann vorgegeben wird, wenn die Brennkraftmaschine in einem vorbestimmten (Teil)Lastbereich betrieben wird. Die Entscheidung über die Zylinderabschaltung bzw. -wiedereinsetzung und deren Ausmaß wird im bevorzugten Ausführungsbeispiel anhand von Motorlast und Motordrehzahl getroffen. Unterschreitet die gemessene Motorlast und die gemessene Drehzahl einen vorbestimmten Grenzwert, so wird eine vorgegebene Anzahl Zylinder abgeschaltet. Bei Überschreiten des Grenzwerts werden die Zylinder wiedereingesetzt, d.h. die Kraftstoffzufuhr wieder aufgenommen. Gemäß der vorliegenden Erfindung wird ausgehend vom Fahrerwunsch nach Maßgabe der vorgegebenen Zylinderzahl durch Eingriff in den Zündwinkel und in die Füllung sowohl im stationären Betrieb als auch in den Übergängen das vom Fahrer vorgegebene Motormoment, Motorlast, Füllung oder Leistung im wesentlichen auf dem vom Fahrer vorgegebenen Wert gehalten.

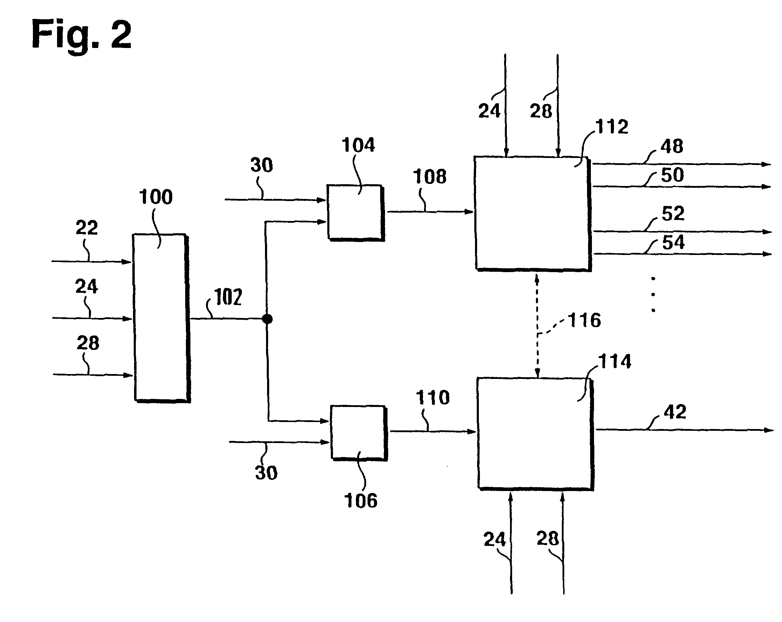

In Figur 2 ist anhand eines Blockschaltbildes die grundlegende Struktur der Brennkraftmaschinensteuerung im Rahmen der erfindungsgemäßen Lösung dargelegt. Die in den Blockschaltbildern dargestellten Elemente sind in einer bevorzugten Realisierung Teile des Programms des Mikrocomputers, wobei die Blöcke spezielle Programmteile mit Tabellen, Kennlinien, Kennfelder und/oder Berechnungsschritte repräsentieren.

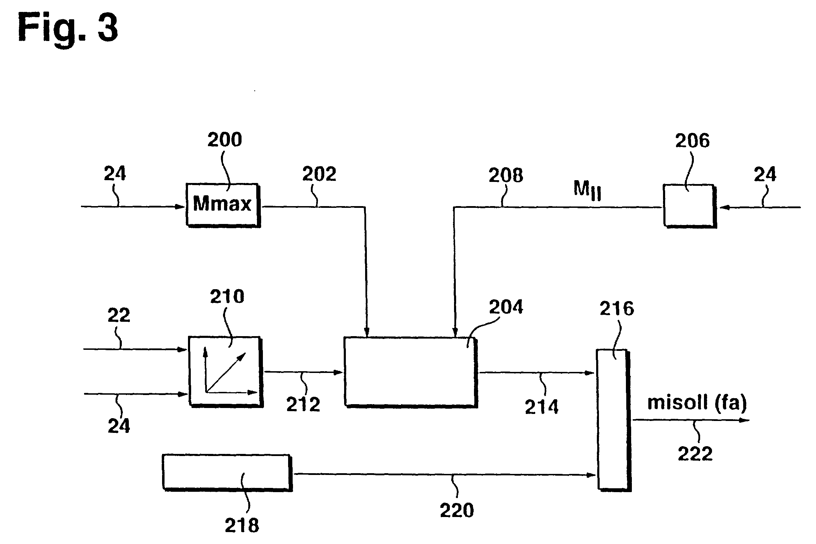

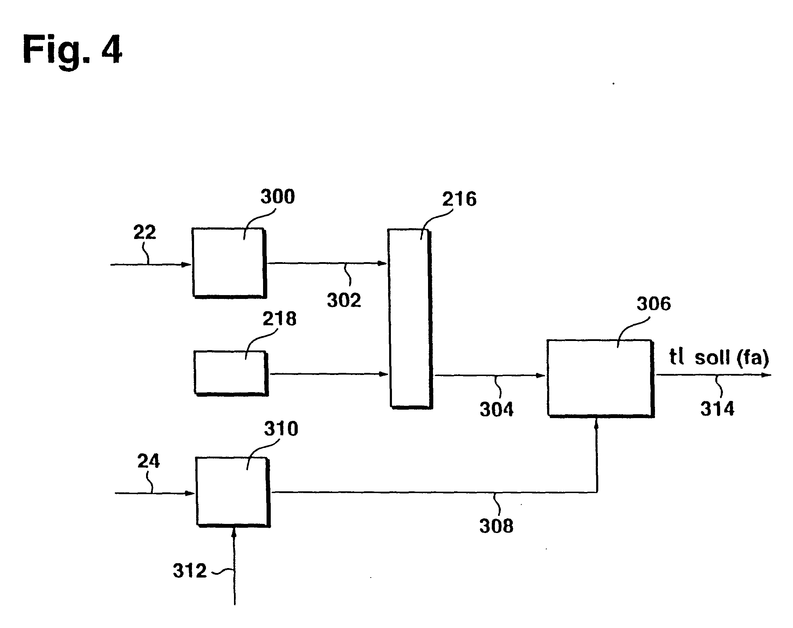

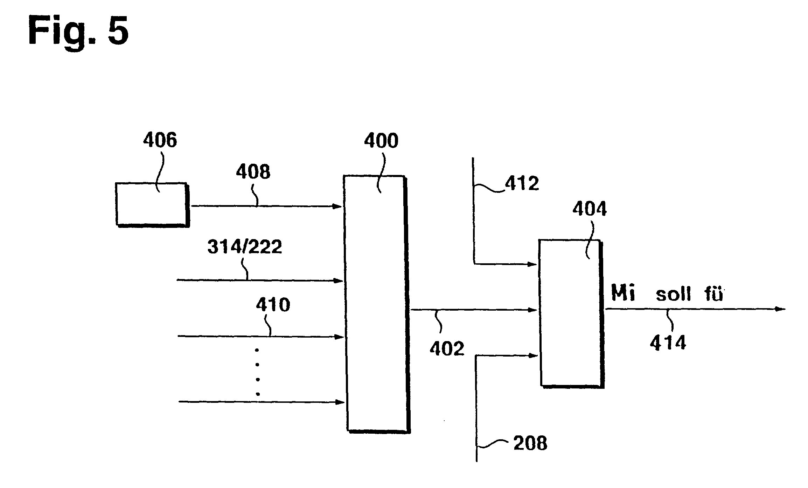

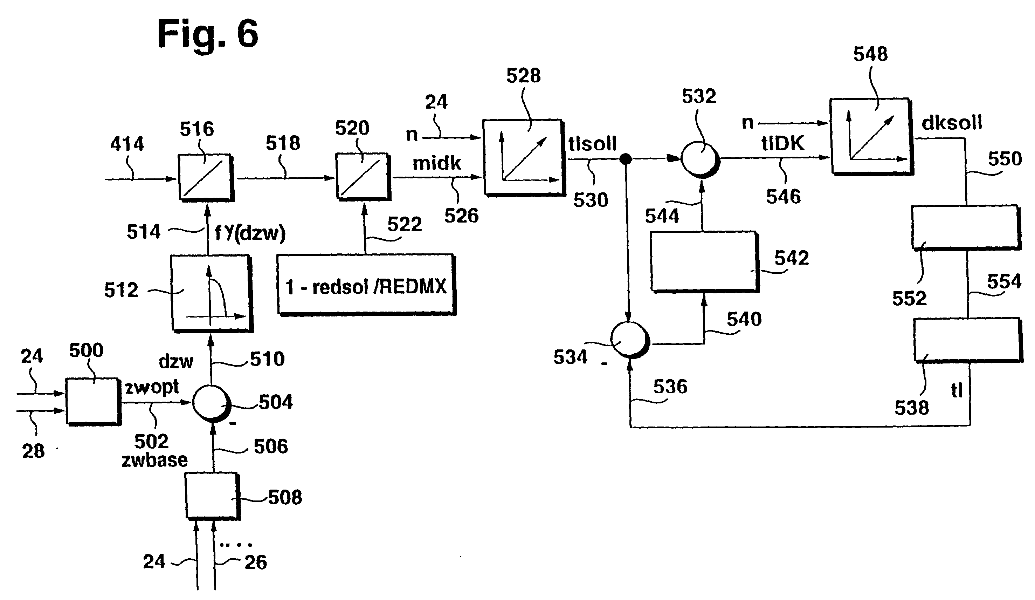

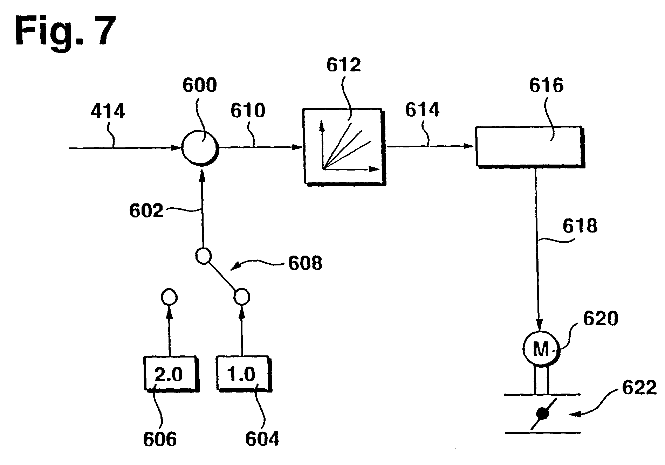

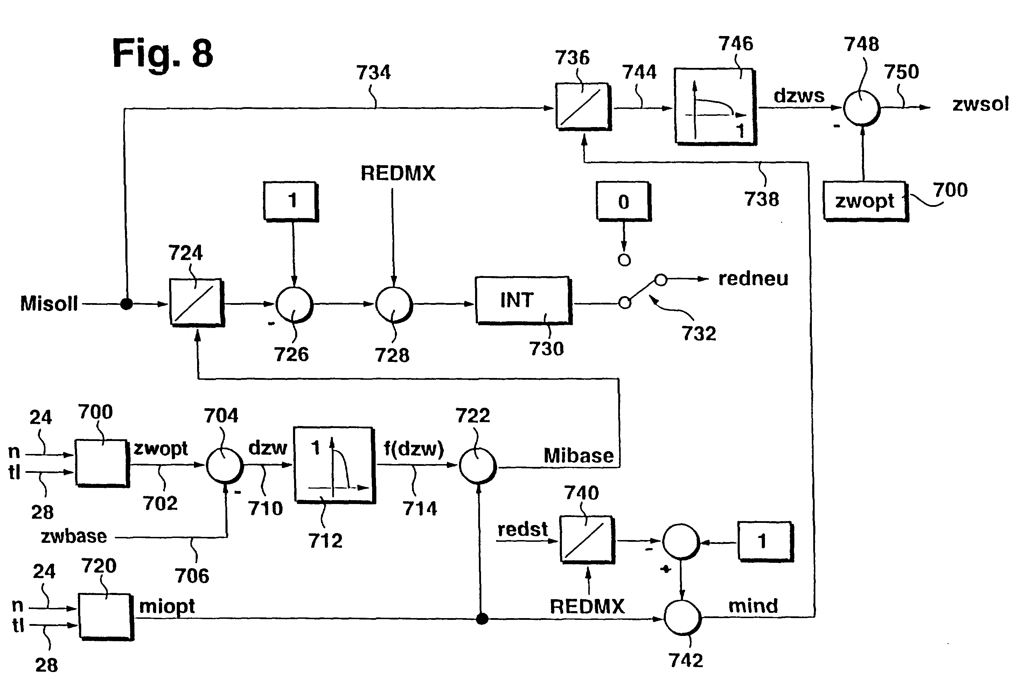

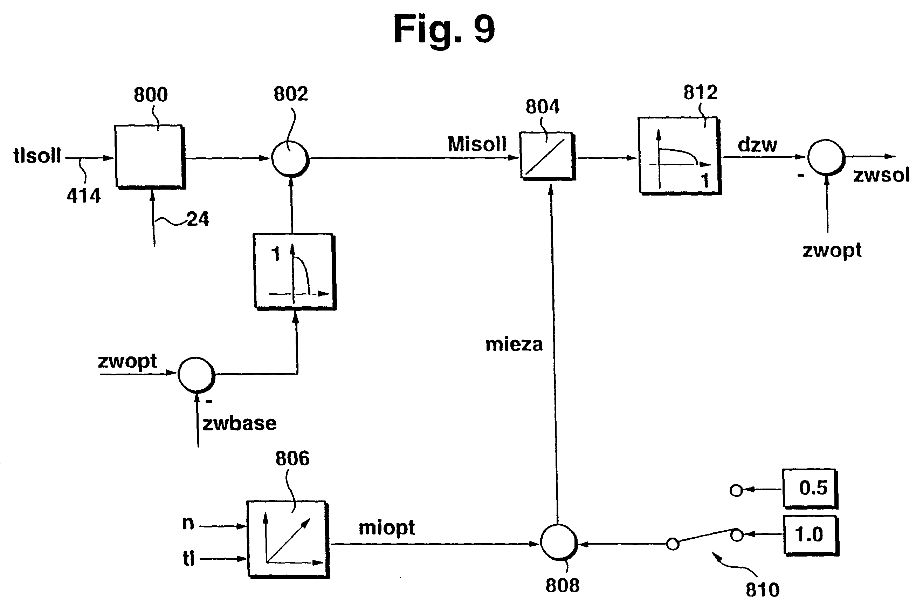

Die Eingangsleitungen 22, 24 und 28 werden auf ein Element 100 zur Ermittlung des Fahrerwunsches geführt. Der auf die nachfolgende Weise (vgl. Figur 3 oder 4) ermittelte Fahrerwunsch wird über eine Leitung 102 zu Elementen 104 und 106 geführt, denen ferner jeweils die Leitung 30 zugeführt ist. Die Elemente 104 und 106 dienen zur Auswahl des zur Motorsteuerung vorzugebenden Sollwerts nach Maßgabe der zugeführten Soll-Größen bezüglich Fahrerwunsch sowie externen Eingriffen (vgl. Figur 5) . Der ausgewählte Sollwert wird über Leitungen 108 bzw. 110 zu Berechnungseinheiten 112 und 114 geführt. Das Berechnungselement 112 berechnet aus dem zugeführten Sollwert nach Maßgabe von wenigstens Motordrehzahl und Motorlast die Korrektur des Zündwinkels und/oder die Einspritzausblendung (vgl. Figur 8 oder 9). In analoger Weise berechnet das Berechnungselement 114 aus dem zugeführten Sollwert nach Maßgabe von wenigstens Motordrehzahl und Motorlast die Füllung, die durch Ansteuerung der Drosselklappe über die Leitung 42 eingestellt wird (vgl. Figur 6 oder 7). Zum Austausch von Daten sind in einem bevorzugten Ausführungsbeispiel die Berechnungselemente 112 und 114 über die Leitung 116 verbunden.

Zur Verbrauchs reduzierung und Verbesserung der Schadstoffemission gibt die Steuereinheit abhängig vom Motorbetriebszustand (Motorlast, Motordrehzahl) die Zahl der abzuschaltenden oder wiedereinzusetzenden Zylinder (Reduzierstufe) vor. Durch die in Figur 2 skizzierte Vorgehensweise werden neben dieser Zylinderabschaltung weitere Eingriffe auf das Drehmoment der Brennkraftmaschine (Eingriff von einer Antriebsschlupfregelung, von einer Getriebesteuerung, vom Fahrer) durch Einstellung der Füllung (langsamer Eingriff), Einspritzung und Zündwinkel (schneller Eingriff) koordiniert.

Zur Einstellung der Füllung wird dabei im Rahmen des Berechnungselements 114 die vorgegebene Zylinderabschaltung und der stationäre Zündwinkel ohne zusätzlichen Eingriff berücksichtigt, so daß bei konstanter Pedalstellung (im stationären Fall) das von der Brennkraftmaschine abgegebene Drehmoment konstant bleibt, unabhängig davon, ob Zylinderabschaltung vorliegt oder nicht. Während des dynamischen Vorgangs bei der Realisierung der vorgegebenen Zylinderabschaltung oder bei deren Rücknahme wird der Zündwinkel korrigiert und/oder einzelne Einspritzungen ausgeblendet, so daß das von der Brennkraftmaschine abgegebene Drehmoment auch während dieses dynamischen Vorgangs (bei konstanter Pedalstellung) im wesentlichen konstant bleibt (Berechnungselement 112). Dabei werden im bevorzugten Ausführungsbeispiel gemäß dem eingangs genannten Stand der Technik Zündwinkel- und Einspritzeingriff synchronisiert.

Zur Ermittlung des vom Fahrer vorgegebenen Sollwerts stehen verschiedene Wege offen. Es ist bekannt, aus dem Fahrpedalwinkel ein Soll-Kupplungsmoment zu bestimmen. Dieses Moment wird aus dem abhängig von Fahrpedalstellung und Fahrzeuggeschwindigkeit berechneten Radmoment unter Berücksichtigung des Getriebezustandes (Gangstufe, Wandlerzustand, Getriebeverlust) berechnet.

Eine andere Möglichkeit zur Berechnung des Fahrer-Soll-Wertes ist in Figur 3 skizziert. Dort wird direkt aus dem Fahrpedalwinkel durch Interpolation zwischen dem Momentenbedarf im Leerlauf MLL und dem maximalen Moment MMAX ein vom Fahrer vorgegebenes Soll-Verbrennungsmoment MISOLL (FA) berechnet.

In Figur 3 ist diese Ausführung des Blocks 100 dargestellt. Dabei wird der maximale Momentenwert und der Momentenbedarf im Leerlauf (Pedal nicht getreten) MLL als drehzahlabhängige Kennlinien vorgegeben. In einem anderen vorteilhaften Ausführungsbeispiel stellt der Momentenbedarf im Leerlauf (Pedal nicht getreten) MLL den (drehzahlabhängigen) Ausgang eines Leerlaufdrehzahlreglers dar. Im in Figur 3 dargestellten Ausführungsbeispiel wird die Motordrehzahl über die Leitung 24 der gespeicherten Kennlinie für das maximale Moment 200 zugeführt, aus der ein maximaler Momentenwert ausgelesen und über die Leitung 202 zum Interpolationsblock 204 geführt wird. Entsprechend wird die Motordrehzahl über die Leitung 24 der gespeicherten Kennlinie 206 für den Leerlaufmomentenbedarf zugeführt, aus dem ein den Leerlaufbedarfswert MLL repräsentierender Wert ausgelesen und über die Leitung 208 zum Interpolationsblock 204 geführt wird. Ferner ist ein vorprogrammiertes Kennfeld 210 vorgesehen, dem über die Leitung 24 die Motordrehzahl, über die Leitung 22 die Fahrpedalstellung zugeführt wird. Abhängig von diesen beiden Größen wird ein der Fahrpedalstellung entsprechendes Verbrennungsmoment zwischen einem Maximal- und einen Minimalwert im Kennfeld bestimmt und über die Leitung 212 zum Interpolationsblock 204 geführt. Im Interpolationsblock 204 wird der Sollwert im Rahmen einer linearen Interpolation zwischen Maximal- (MMAX) und Minimalwert (MLL) berechnet und der entsprechende Fahrer-Soll-Momentenwert über die Leitung 214 zu einer Auswahlstufe 216 geführt. In dieser Auswahlstufe 216 wird aus dem aufgrund der Fahrpedalbetätigung vorgegebenen Soll-Momenten-Wert und gegebenenfalls einem entsprechenden Soll-Momenten-Wert, der von einem Fahrgeschwindigkeitsregler 218 über die Leitung 220 zur Auswahlstufe 216 geführt wird, der jeweils größere als Fahrer-Soll-Momentenwert MISOLL(FA) ausgewählt und über die Leitung 220 abgegeben. Der vom Fahrgeschwindigkeitsregler vorgegebene Soll-Momenten-Wert wird entsprechend unter Berücksichtigung von Getriebeübersetzung, Getriebeverlusten und den Verlustmomenten des Motors auf der Basis der vom Fahrer über ein Bedienelement vorgegebenen Soll-Fahrgeschwindigkeit berechnet. Die Kennlinien 200 und 206 sind derart vorgegeben, daß der Leerlaufbedarfswert mit steigender Drehzahl gegebenenfalls bis auf null abnimmt.

Ein weiteres vorteilhaftes Ausführungsbeispiel zur Bestimmung des Fahrerwunsches ist in Figur 4 dargestellt. Bei dieser Ausführung wird anstelle des Sollmoments ein Sollfüllungswert (Sollast) ermittelt. Der Fahrpedalstellungswert wird über die Leitung 42 einer Interpolationsstufe 300 zugeführt, in welcher durch Interpolation zwischen einem minimalen und einem maximalen Füllungswert der relative Sollfüllungswert ermittelt wird. Dieser Wert wird über die Leitung 302 zur Auswahlstufe 216 geschickt. Dort wird aus dem entsprechend behandelten Soll-Wert-Signal des Fahrgeschwindigkeitsreglers 218 und dem relativen Füllungswert aus der Fahrpedalstellung der jeweils größere als Fahrerwunschwert ausgewählt. Das ausgewählte Soll-Wert-Signal wird über die Leitung 304 auf einen Multiplikationsblock 306 geführt. Diesem wird die Leitung 308 von einem Leerlaufregler 310 zugeführt, der auf der Basis der Motordrehzahl sowie der über die Leitung 312 zugeführten Zylinderabschaltbedingung die relative Füllung im Leerlauf ermittelt. Der vom Leerlaufregler ermittelte relative Füllungswert wird zur Korrektur entsprechend der Anzahl der abgeschalteten Zylinder durch das Verhältnis der maximalen Zylinderanzahl zur abgeschalteten Zylinderanzahl dividiert. Anschließend wird im Block 306 zur Bestimmung des über den Leerlaufwert hinausgehenden Sollfüllungswert ein aus dem Füllungswert des Leerlaufreglers abgeleiteter prozentualer Anteil der maximalen Füllung als Korrekturwert ermittelt und mit dem Fahrerfüllungswert multipliziert. Das Ergebnis, der Füllungssollwert TLSOLL(FA) wird über die Leitung 314 abgegeben.

Neben der Bestimmung von Füllungs- oder Momentensollwerten wird in anderen vorteilhaften Ausführungen ein Lastsollwert (entspricht Füllungswert), ein Leistungssollwert (Berechnung aus Sollmoment und Drehzahl), etc. ermittelt.

Im Block 106 im Pfad der Füllungseinstellung findet die Koordination der in den Figuren 3 bzw. 4 ermittelten Fahrer-Soll-Werte mit Sollwerten, die von zusätzlichen Eingriffen stammen, statt. Gemäß Figur 5 wird die Leitung 314 bzw. 222 einer ersten Auswahlstufe 400 zugeführt, in der aus den zugeführten Sollwerten der jeweils kleinste ausgewählt wird. Dementsprechend werden in der Auswahlstufe 400 Eingriffe zusammengefaßt, die zu einer Reduzierung des Motormoments gegenüber dem Fahrerwunsch führen können. Derartige Funktionen sind beispielsweise eine Antriebsschlupfregelung, eine Getriebesteuerung oder Funktionen wie Lastbegrenzung, Geschwindigkeitsbegrenzung, Drehzahlbegrenzung und/oder Drehmomentenbegrenzung. Die entsprechenden Solwert werden in der jeweils angewendeten Dimension (Füllung, Moment, etc.) dem Element 400 zugeführt.

Der jeweils ausgewählte Sollwert wird über die Leitung 402 auf eine weitere Auswahlstufe 404 geführt. Diese gibt den jeweils größeren Wert weiter, so daß durch die Auswahlstufe 404 Eingriffe berücksichtigt werden, welche das Motormoment gegenüber dem Fahrerwunsch erhöhen. Derartige Eingriffe stammen von der Leerlaufregelung oder von einer Motorschleppmomentenregelung. Die entsprechenden Sollwerte werden über die Leitungen 208 bzw. 412 zugeführt. Über die Ausgangsleitung 414 wird dann ein Sollmomentenwert zur Füllungseinstellung MISOLLFÜ bzw. ein Soll-Füllungswert TLSOLL an den Berechnungsblock 114 abgegeben.

Die entsprechende Vorgehensweise wird in bezug auf den Kraftstoff und Zündwinkeleingriff im Block 104 durchgeführt (Ausgangsgröße Sollverbrennungsmoment MISOLL bzw. Sollastwert TLSOLL). Dabei werden nur Eingriffe berücksichtigt, die auch oder nur auf Kraftstoffzumessung und/oder Zündung wirken wie Antriebsschlupfregelung, Leerlaufregelung, etc.

In Figur 6 ist die Arbeitsweise des Berechnungsblocks 114 an einem bevorzugten Ausführungsbeispiel dargestellt. Dabei wird die Drosselklappenöffnung unter Berücksichtigung der vorgegebenen Zylinderabschaltung berechnet. Um das nach Figur 5 ermittelte und über die Leitung 414 übertragene Soll-Verbrennungsmoment zu realisieren, muß die Füllung, d.h. die Drosselklappeneinstellung, bei Zylinderabschaltung korrigiert werden. Unter Berücksichtigung des Einflusses des Zündwinkels ohne Eingriff ZWBASE und der Zylinderabschaltung mit einer vorgegebenen Reduzierstufe REDSOL ergibt sich ein indiziertes Motormoment MIDK zur Berechnung der Drosselklappenöffnung gemäß der folgenden Gleichung:

$$MIDK = MISOLLFÜ/(f(ZWOPT - ZWBASE) \times (1 - REDSOL/REDMX))$$

wobei ZWOPT der optimale Zündwinkel, ZWBASE der Basiszündwinkel ohne Eingriff, f() die von der Differenz zwischen optimalem Zündwinkel und dem auf das optimale Moment MIOPT bezogene Basiszündwinkel abhängige Wirkungsgradkennlinie, REDSOL die vorgegebene Reduzierstufe und REDMX die maximale Stufenzahl ist.

Wird die Hälfte der Zylinder abgeschaltet, so ist REDSOL = REDMX/2, so daß das indizierte Motormoment MIDK etwa um den Faktor 2 vergrößert wird.

Die Berechnung von MISOLLFÜ gemäß der oben dargestellten Gleichung ist in Figur 6 dargestellt. In einem Kennfeld 500 wird nach Maßgabe der über die Leitung 24 und 26 zugeführten Motordrehzahl und Motorlast der optimale Zündwinkel ZWOPT bestimmt. Dieser Zündwinkel bzw. das Kennfeld 500 ist mit Blick auf einen optimalen Wirkungsgrad der Brennkraftmaschine festgelegt. Über die Leitung 502 wird der optimale Zündwinkel auf eine Vergleichsstelle 504 geführt. Dieser wird über die Leitung 506 zur Bildung der Differenz DZW der Basiszündwinkel ohne Eingriff zugeführt. Dieser wird im Kennfeld 508 abhängig von Motordrehzahl, Motorlast, Motortemperatur etc. gebildet. Dieser Zündwinkel stellt den Zündwinkel dar, der unter den aktuellen Betriebsbedingungen ohne externen Eingriff, ohne Zylinderabschaltung und Zündwinkelkorrektur eingestellt werden würde. Die Differenz DZW wird von der Vergleichsstelle 504 über die Leitung 510 der Wirkungsgradkennlinie 512 zugeführt. Die Ausgangsleitung 514 dieser Kennlinie führt auf ein dividierendes Element 516. Das Ausgangssignal der Wirkungsgradkennlinie 512 stellt einen Korrekturwert des unter optimalem Wirkungsgrad gebildeten Sollwert MISOLLFÜ dar, welcher aus der Abweichung des eingestellten Zündwinkels ohne Eingriff von dem zur Einstellung des optimalen Wirkungsgrades der Brennkraftmaschine ermittelten optimalen Zündwinkels folgt. Die Korrektur findet entsprechend der obigen Gleichung im dividierenden Element 516 statt. Das Ergebnis wird über die Leitung 518 zum dividierenden Element 520 geführt. Dort wird über die Leitung 522 von der Zylinderabschaltvorgabeeinheit 524 ein Faktor zugeführt, der die Zahl der abgeschalteten Zylinder repräsentiert. Das Ergebnis MIDK des Elements 520 wird über die Leitung 526 zum Kennfeld 528 geführt, in dem aus dem Sollmotormoment MIDK zur Berechnung der Drosselklappenöffnung nach Maßgabe der Motordrehzahl ein Soll-Lastwert TLSOLL über die Leitung 530 ausgelesen wird. Dieser Sollwert wird einerseits auf eine Multiplikationsstufe 532, andererseits auf eine Vergleichsstelle 534 geführt. Letzterer wird ferner über die Leitung 536 ein Maß für die Ist-Last des Motors 538 zugeführt. Die Ist-Last wird dabei durch einen Luftmassenmesser, einen Luftmengenmesser, einen Saugrohrdruckfühler oder Brennraumdruckfühler gemessen. Die Differenz zwischen Soll- und Ist-Last wird über die Leitung 540 zur Reglereinheit 542 geführt. Diese bestimmt aus der Regelabweichung nach Maßgabe einer vorgegebenen Regelstrategie (z. B. PID) einen Korrekturwert für den Last-Soll-Wert. In der Multiplikationsstufe 532 wird Sollwert und Korrekturwert multipliziert und über eine Ausgangsleitung 546 auf ein weiteres Kennfeld 548 geführt. Dort wird nach Maßgabe der Drehzahl aus dem vorgegebenen, korrigierten Soll-Lastwert ein Soll-Drosselklappenstellungswert DKSOLL ermittelt. Dieser wird über die Leitung 550 zur elektrischen Stelleinrichtung 542 geführt, die beispielsweise nach Maßgabe eines Stellungsregelkreises über die Leitung 554 die Drosselklappe der Brennkraftmaschine und damit die Füllung bzw. das Verbrennungsmoment durch Füllungseinstellung auf den vorgegebenen Soll-Wert einstellt (die einzuspritzende Kraftstoffemnge wird wie bekannt wenigstens aus Motordrehzahl und Last mit Blick auf ein vorgegebenes Luft/Kraftstoffverhältnis bestimmt).

Die Vorgehensweise nach Figur 6 bildet also aus dem Soll-Moment MIDK und der Drehzahl über das Kennfeld 528, welches bei optimalem Zündwinkel gemessen wurde, die Soll-Füllung TLSOLL und letztendlich die Drosselklappen-Soll-Stellung DKSOLL. Die Vorgabe der abzuschaltenden Zylinder (Block 524) erfolgt im bevorzugten Ausführungsbeispiel im Leerlauf und bei niedriger Last, z.B. wenn das Soll-Moment durch den Fahrer kleiner als eine vorgegebene Schwelle ist. Die Abschaltung von Zylindern findet auch im Schiebebetrieb statt. Mit erhöhter Fahrpedalstellung steigt das Soll-Moment für die Füllung. Wird diese so groß, daß beispielsweise die berechnete Drosselklappenöffnung DKSOLL eine vorgegebene drehzahlabhängige Schwelle überschreitet (z. B. 85°), wird im bevorzugten Ausführungsbeispiel die Zylinderabschaltung rückgängig gemacht. In diesem Fall wird das Soll-Moment MIDK ungefähr um die Hälfte reduziert. Wenn sich das System wieder im Leerlauf bzw. bei niedriger Last oder in der Schiebebetriebsphase befindet, wird die Abschaltvorgabe erneut aktiviert.

Die in Figur 6 dargestellt Realisierung gilt nur für den stationären Fall, d. h. für den Fall, wenn die Zylinder bereits abgeschaltet sind. Während der Abschaltung bzw. dem Wiedereinsetzen der Zylinder müssen die Eingriffe in die Füllung, in die Zylinder und in den Zündwinkel derart synchronisiert werden, daß möglichst wenig Änderung an dem vom Motor abgegebenen Drehmoment vor und nach der Zylinderabschaltung merkbar ist. Wird eine vorgegebene Anzahl von Zylindern abgeschaltet, wird das Drehmoment MIDK aus der oben genannten Gleichung mit der neuen Anzahl abgeschalteter Zylinder REDSOL berechnet. Die dann bestimmte Drosselklappenöffnung kann sofort (sprungförmig) oder im bevorzugten Ausführungsbeispiel mit einer vorgegebenen Zeitrampe einstellt werden. Dadurch steigt die gemessene Last TL. Dieses Verhalten wird zur Zündwinkelkorrektur wie nachfolgend anhand von Figur 8 beschrieben ausgenutzt.

In Figur 7 ist ein zweites Ausführungsbeispiel zur Einstellung der Füllung nach Maßgabe des vorgegebenen Sollwerts dargestellt. Diese Ausführungsbeispiel ist vorzugsweise dann anzuwenden, wenn der Soll-Wert ein Füllungswert ist.

Der Sollwert wird über die Leitung 414 zugeführt. In der darauffolgenden Multiplikationsstelle 600 wird der zugeführten Soll-Wert mit über die Leitung 602 zugeführten Faktoren multipliziert, welche die Anzahl der abgeschalteten Zylinder repräsentieren. Sind alle Zylinder aktiv, so wird aus der Speicherstelle 406 der Faktor 1 ausgelesen. Wird die Hälfte der Zylinder abgeschaltet, wird aus der Speicherzelle 606 unter Schaltung des Schaltelements 608 der Wert 2 ausgelesen. Entsprechend können für weitere Zahlen abzuschaltender Zylinder Faktoren vorgesehen werden. Der korrigierte Soll-Wert wird über die Leitung 610 auf ein Kennfeld 612 geführt, in welchem gegebenenfalls unter Berücksichtigung der Motordrehzahl ein Soll-Einstellwinkel für die Drosselklappe ermittelt wird. Dieser wird über die Leitung 614 zum Stellungsregler 616 abgegeben, welcher über die Ansteuerleitung 618 und den Motor 620 die Drosselklappe 622 entsprechend dem Soll-Wert einstellt.

In einer vereinfachten Version der Vorgehensweise nach Figur 6 kann die in Figur 7 dargestellte Vorgehensweise auch bei Vorgabe eines Soll-Momentenwerts entsprechend angewendet werden.

Figur 8 zeigt ein bevorzugtes Ausführungsbeispiel zur Steuerung des Zündwinkels und der Kraftstoffzufuhr, insbesondere im dynamischen Bereich, zur Ergänzung der in Figur 6 bzw. 7 dargestellten Einstellung der Füllung.

Bei Abschalten bzw. Wiedereinsetzen von Zylindern wird gemäß Figur 6 bzw. 7 die Drosselklappenstellung verändert. Dadurch steigt die Motorlast an. Das Verbrennungsmoment MIOPT bei optimalem Zündwinkel wird aus Motorlast und Drehzahl im Kennfeld 720 abgeschätzt. Die Abweichung der Zündwinkeleinstellung von der optimalen Einstellung wird analog zu Figur 6 in den Schritten 700 bis 714 bestimmt. In der Multiplizierstufe 722 wird aus dem abgeschätzten optimalen Verbrennungsmoment MIOPT unter Berücksichtigung des Zündwinkeleinflusses ohne Eingriff ein Basisverbrennungsmoment MIBASE ermittelt. Dieses Basisverbrennungsmoment stellt das Moment dar, welches durch Einstellen des Basiszündwinkels ZWBASE vom Motor erzeugt wird.

Dieses Basisverbrennungsmoment MIBASE ohne Eingriff wird im dividierenden Element 724 mit dem vorgegebenen Soll-Moment verglichen (dividiert) zur Betsimmung von Zündwinkeleinstellung und/oder Kraftstoffzumessung.

Ist dieses Moment aufgrund der steigenden Motorlast größer als das Soll-Moment, wird ein Kraftstoffeingriff und/oder eine Zündwinkelkorrektur berechnet, so daß das Soll-Moment eingehalten wird. Durch diese Maßnahme wird der Drehmomentenanstieg aufgrund der Änderung der Füllung durch Zylinderausblendung und/oder Zündwinkelkorrektur kompensiert. Wesentlich ist, daß die während des dynamischen Vorgangs ausgeblendeten Zylinder auch die Zylinder sind, die gemäß der Vorgabe der Zylinderabschaltung abgeschaltet werden sollen. Im einfachsten Beispiel einer Bankabschaltung werden die Zylinder auf einer Motorbank während des dynamischen Vorgangs einer nach dem anderen gemäß eines vorgegebenen Zeitverlaufs abgeschaltet. Der Momentenübergang bei Abschaltung wird durch Zündwinkelkorrektur realisiert. Ist der Momentenübergang abgeschlossen, ist die Reduzierstufe REDNEU die von der Zylinderabschaltung vorgegebene. Der Zündwinkel wird auf den Basiszündwinkel eingestellt. Diese Werte werden dann während der Zylinderabschaltung beibehalten. Wird im bevorzugten Ausführungsbeispiel die Zylinderabschaltung im Schubbetrieb (alle Zylinder abgeschaltet) vorgenommen, wird nur eine Beeinflussung über die Füllung vorgenommen, keine Korrektur des Zündwinkels. Beim Schub-Wiedereinsetzen werden dann nur die erlaubten Zylinder wiedereingesetzt.

Beim Wiedereinsetzen wird die Reduzierstufenvorgabe auf den Wert null gesetzt, d. h. es werden alle Zylinder befeuert. Die Füllung wird dabei gemäß der obigen Gleichung kleiner, wobei die Drosselklappe sofort oder mit einer vorgegebenen Rampe auf den neuen Wert eingestellt wird. Die gemessene Last und dadurch das erfaßte Verbrennungsmoment MIBASE sinken. Entsprechend wird der Zündwinkel und/oder die Zahl der wiedereinzusetzenden Zylindern gesteuert. Mit sinkender Last und damit sinkendem Verbrennungsmoment geht die Reduzierstufe REDNEU ausgehend von dem durch die Zylinderabschaltung vorgegebenen Wert Richtung null. Auch hier wird das Moment zwischen zwei Reduzierstufen durch Zündwinkelverstellung beeinflußt. Wenn die Last auf dem stationären Wert eingeschwungen ist, ist der dynamische Vorgang beendet und die Reduzierstufe bleibt null. Der Zündwinkel wird wieder auf den Basiszündwinkel eingestellt.

Allgemein gilt:

$$MISOLL = MIOPT \times (f (ZWOPT - ZWSOL) \times (1 - REDNEU/REDMX))$$

wobei ZWSOL der durch die Korrektur ausgegebene Zündwinkel ist.

Durch die in Figur 8 dargestellte Regelung des Sollmoments nach dieser Gleichung ergibt sich bei Einhalten von MISOLL automatisch ein passender Zündwinkel ZWSOL und eine passende Reduzierstufe REDNEU. Wenn die Fahrpedalstellung und die Drehzahl während des Vorgangs konstant bleiben und kein externer Eingriff vorliegt, bleibt MISOLL konstant.

Wie aus dem Stand der Technik bekannt wird der Einspritzeingriff und die Zündwinkelverstellung auch zur Realisierung von schnellen Anforderungen, wie beispielsweise einer ASR- oder einer MSR-Anforderung verwendet. Diese geben die Sollwerte vor, die dann entsprechend Druch Füllung, Zündwinkel und Kraftstoffzumessung eingestellt werden. Somit sind diese Eingriffe unabhängig von einem Betrieb mit oder ohne Zylinderabschaltung.

Gemäß dem eingangs genannten Stand der Technik ist der Eingriff von Zündwinkel und Einspritzausblendung so synchronisiert, daß beim Wechsel der Reduzierstufe ein möglichst geringer Momentensprung entsteht.

Figur 8 zeigt ein vorteilhaftes Ausführungsbeispiel der oben geschilderten Vorgehensweise. Wie bereits erwähnt wird in der Dividierstufe 724 ein Vergleich zwischen Soll-Moment MISOL und Verbrennungsmoment MIBASE vorgenommen. Der Quotient aus MISOLL und MIBASE wird in der Vergleichsstufe 726 von eins abgezogen und die Differenz in der Multiplizierstufe 728 mit der maximalen Reduzierstufenzahl REDMX multipliziert. Daraufhin wird das Ergebnis im Inverter 730 invertiert. Am Ausgang des Inverters steht somit der Wert 1/((1 - MISOLL/MIBASE) x REDMX) an. Dies ist jedoch nach obiger Gleichung bei optimalem Zündwinkel nichts anderes als die vorgegebene Reduzierstufe REDNEU. Bei aktiver Zylinderabschaltung steht das Schaltelement 732 in der gezeigten Stellung. Es wird demnach eine Reduzierstufe REDNEU ausgegeben, die durch die Füllungsänderung vorgegeben durch Unterbrechung der Einspritzungen zu den vorgegebenen Zylindern realisiert wird. Außerhalb der Phasen mit Zylinderabschaltung steht das Schaltelement 732 in der anderen Stellung, so daß als Reduzierstufe null ausgegeben wird. Über die Leitung 734 wird der Soll-Momentenwert MISOLL einer weiteren Dividierstufe 736 zugeführt. Dieser Pfad bezeichnet die Bestimmung des Soll-Zündwinkels. Dieser Dividierstufe 736 wird die Leitung 738 zugeführt. Auf dieser Leitung wird das unter Berücksichtigung der aktuellen Anzahl abgeschalteter Zylinder bestimmte Verbrennungsmoment MIND zugeführt. Dieses wird durch Umkehrung der obengenannten Formel ermittelt. Es wird aus der aktuellen Anzahl ausgeblendeter Zylinder REDST durch Division mit der maximalen Stufenzahl in Block 740 und der Subtraktion dieses Quotienten von 1 unter Multiplikation in der Multiplizierstufe 742 mit dem optimalen Moment ermittelt. Der Quotient aus Soll-Moment und Verbrennungsmoment, der im Element 736 gebildet wurde, wird über eine Leitung 744, die Wirkungsgradkennlinie 746, in eine Zündwinkeländerung DZW umgewandelt. In der Korrekturstelle 748 wird der im Kennfeld 700 ermittelte optimale Zündwinkel korrigiert und über die Leitung 750 als Sollwinkel ZWSOLL ausgegeben.

Figur 9 zeigt ein vereinfachtes Ausführungsbeispiel in Bezug auf die Bankabschaltung, bei welcher eine ganze Zylinderbank abgeschaltet wird. Dabei wird in diesem Ausführungsbeispiel vom Fahrer kein Momenten-, sondern ein Füllungssollwert vorgegeben. Dieser wird über die Leitung 414 zugeführt. In einem Kennfeld 800 wird der Füllungssollwert nach Maßgabe der Motordrehzahl in einen Momenten-Soll-Wert umgewandelt. Dabei wird in einem bevorzugten Ausführungsbeispiel die relative Füllung vom Fahrer mit der maximalen Last und der Luftdichte multiplizert und über einen Filter korrigiert, der im wesentlichen die Saugrohrdynamik darstellt. Das aus dem Kennfeld ausgelesene Verbrennungsmoment wird in der Multiplizierstelle 802 zum Soll-Verbrennungsmoment MISOLL korrigiert nach Maßgabe der Differenz aus optimalem Zündwinkel und Basiszündwinkel, wie das im anderen Ausführungsbeispiel beschrieben wurde. In der Dividierstelle 804 wird das Soll-Moment MISOLL mit einem berechneten Momentenwert MIEZA dividiert, der das Verbrennungsmoment bei optimalem Zündwinkel unter Berücksichtigung der Zahl der aktiven Zylinder darstellt. Dieses Verbrennungsmoment wird gebildet aus dem in bekannter Weise im Kennfeld 806 ermittelten optimalen Verbrennungsmoments, das in der Multiplizierstufe 808 mit einem Faktor multipliziert wird, der die Zahl der aktiven Zylinder angibt. Sind alle Zylinder aktiv, ist dieser Faktor eins, bei Abschalten einer Zylinderbank ist dieser Faktor 0,5. Die entsprechende Auswahl erfolgt über das Schaltelement 810. Aus den Quotienten zwischen Soll-Verbrennungsmoment und Ist-Verbrennungsmoment wird nach Maßgabe der Wirkungsgradfunktion 812 ein Zündwinkelkorrekturwert DZW ermittelt. Durch Subtraktion dieses Korrekturwerts vom optimalen Zündwinkel wird der einzustellende Soll-Zündwinkel ZWSOL gebildet.

Der in Figur 9 beschriebene Zündwinkeleingriff (schneller Eingriff) wird bei Aktivieren der Zylinderabschaltung bzw. bei Wiedereinsetzen in die abgeschalteten Zylinder (Schalten des Schaltelements 810) aktiviert und nach einer bestimmten Zeit oder abhängig von der Last wieder gesperrt, wenn die Last eingeschwungen und die Bankumschaltung erfolgreich durchgeführt wurde.

Wird vom Betrieb mit 12 Zylindern auf einen Betrieb mit 6 Zylindern umgeschaltet, wird zuerst nach Maßgabe der Figur 6 die Füllung erhöht. Durch Zündwinkelkorrektur wird im Rahmen der normalen Motorsteuerung diese Füllungsänderung kompensiert, so daß das Motormoment konstant bleibt. Ist die Füllung eingeschwungen, wird die Zylinderabschaltung durchgeführt und die Zylinder auf einer Bank sofort einer nach dem anderen abgeschaltet. Dadurch reduziert sich der Verbrennungsmomentenwert MIEZA um die Hälfte, wodurch der Zündwinkel bei den noch befeuerten Zylindern wieder nach früh gezogen wird. Wenn alle Zylinder abgeschaltet sind, wird der Zündwinkeleingriff beendet. Bei Umschalten des Betriebs von 6 auf 12 Zylinder werden sowohl im Füllungspfad als auch bei der Zündwinkelkorrektur die Schaltelemente gleichzeitig gewechselt. Die abgeschalteten Zylinder werden sofort wieder zugeschaltet. Da sich die Füllung langsam reduziert, wird am Anfang das Motormoment zu groß. Daher wird nach Maßgabe der Figur 9 der Zündwinkel nach spät gezogen. Mit sinkender Last wird der Zündwinkel wieder mehr und mehr nach früh gezogen. Ist die Last eingeschwungen und der Eingriff zu Ende, wird der Soll-Zündwinkel aus den Berechnungen nach Figur 9 nicht mehr berücksichtigt.

Die Ausführung nach Figur 9 ist nicht nur darauf beschränkt, daß ein Füllungssollwert vom Fahrer vorgegeben wird, sondern kann als einfaches Ausführungsbeispiel auch im Rahmen des Ausführungsbeispiels der Figur 8 durchgeführt werden.

Im bevorzugten Ausführungsbeispiel wird im Falle der Bankabschaltung mit jedem Abschaltvorgang jeweils die andere Zylinderbank abgeschaltet.

## Patentansprüche

1. Verfahren zur Steuerung einer Brennkraftmaschine, bei dem

   - ein Sollwert (Misoll) für das Drehmoment der Brennkraftmaschine vorgegeben wird,
   - je nach Betriebszustand die Zylinderzahl vorgegeben wird, mit der die Brennkraftmaschine betrieben wird,
   - beim Übergang von einer Betriebsart mit einer ersten in eine Betriebsart mit einer zweiten Zylinderzahl die Anzahl der Zylinder beeinflußt wird,

   dadurch gekennzeichnet, daß

   - die Füllung auf der Basis des Sollwerts und der zweiten Zylinderzahl (redsol) eingestellt wird, und
   - der Zündwinkel (zwsol) abhängig von der Abweichung des Sollwerts (Misoll) vom aktuellen, die eingestellten Füllung (Miopt) und die aktuell aktive Zylinderzahl (redst) berücksichtigenden Istmoment (Mind, Mieza) im Sinne einer Regelung des Istwerts auf den Sollwert bestimmt wird.

2. Verfahren nach Anspruch 1, dadurch gekennzeichnet, daß die aktuelle Zylinderzahl (redneu) nach Maßgabe der Abweichung des Sollwerts (Misoll) von einem, die aktuelle Füllungseinstellung berücksichtigenden Istmoment (Mibase) bestimmt wird.

3. Verfahren nach einem der vorhergehenden Ansprüche, dadurch gekennzeichnet, daß bei aufgebauter Füllung die ausgewählten Zylinder einer nach dem anderen abgeschaltet werden und die Zündwinkelkorrektur an den befeuerten Zylindern einer nach der anderen zurückgenommen wird.

4. Verfahren nach einem der vorhergehenden Ansprüche, dadurch gekennzeichnet, daß der Sollwert ein vom Fahrer vorgegebenes Soll-Drehmoment, eine Soll-Füllung, eine Sollast oder eine Solleistung ist.

5. Verfahren nach einem der vorhergehenden Ansprüche, dadurch gekennzeichnet, daß der Sollwert durch Interpolation aus einem Maximalwert für das Drehmoment bzw. für die Füllung und einem Leerlaufbedarfswert für das Drehmoment bzw. für die Füllung ermittelt wird.

6. Verfahren nach einem der vorhergehenden Ansprüche, dadurch gekennzeichnet, daß der Füllungssollwert bzw. der Momenten-Soll-Wert durch Auswahl aus Fahrervorgabe und Zusatzfunktionen, wie Antriebsschlupfregelung, Motorschleppmomentenregelung, Getriebeeingriff, Leerlaufregelung und/oder durch Begrenzungsfunktionen zur Drehzahl-, Fahrgeschwindigkeits-, Last- und/oder Drehmomentenbegrenzung ermittelt wird.

7. Vorrichtung zur Steuerung einer Brennkraftmaschine,

- mit einem elektronischen Steuergerät (12), welches einen Sollwert (Misoll) für das Drehmoment der Brennkraftmaschine vorgibt und je nach Betriebszustand die Zylinderzahl ermittelt, mit der die Brennkraftmaschine betrieben wird,
- mit Mitteln, die beim Übergang von einer Betriebsart mit einer ersten in eine Betriebsart mit einer zweiten Zylinderzahl die Anzahl der Zylinder beeinflussen,

gekennzeichnet durch

- Füllungssteuerungsmittel (516-552, 600-620), die die Füllung auf der Basis des Sollwerts und der zweiten Zylinderzahl (redsol) einstellen, und
- Zündwinkelsteuermittel (736-750, 800-812), die den Zündwinkel (zwsol) abhängig von der Abweichung des Sollwerts (Misoll) vom aktuellen, die eingestellten Füllung (Miopt) und die aktuell aktive Zylinderzahl (redst) berücksichtigenden Istmoment (Mind, Mieza) im Sinne einer Regelung des Istwerts auf den Sollwert bestimmen.

## Claims

1. Method of controlling an internal combustion engine, in which

- a set point (Misoll) is preset for the torque of the internal combustion engine,
- depending on the operating state, the number of cylinders with which the internal combustion engine is operated is preset,
- during the changeover from one operating mode with a first number of cylinders to an operating mode with a second number of cylinders, the number of cylinders is influenced,

characterized in that

- the charge is set on the basis of the set point and the second number of cylinders (redsol), and
- the ignition angle (zwsol) is determined as a function of the deviation of the set point (Misoll) from the current actual torque (Mind, Mieza), taking into account the set charge (Miopt) and the currently active number of cylinders (redst), for the purposes of regulating the actual value to the set point.

2. Method according to Claim 1, characterized in that the current number of cylinders (redneu) is determined in accordance with the deviation of the set point (Misoll) from an actual torque (Mibase) taking into account the current charge setting.

3. Method according to one of the preceding claims, characterized in that, when the charge has built up, the selected cylinders are cut off one after the other, and the ignition-angle correction at the fired cylinders is withdrawn one after the other.

4. Method according to one of the preceding claims, characterized in that the set point is a desired torque preset by the driver, a desired charge, a desired load or a desired output.

5. Method according to one of the preceding claims, characterized in that the set point is determined by interpolation from a maximum value for the torque or for the charge and from an idling demand value for the torque or for the charge.

6. Method according to one of the preceding claims, characterized in that the charge set point or the torque set point is determined by selection from driver input and additional functions, such as traction control, engine torque control, gear engagement, idling control and/or by limiting functions for limiting the number or revolutions, travel speed, load and/or torque.

**7.** Apparatus for controlling an internal combustion engine, having

- an electronic control unit (12), which presets a set point (Misoll) for the torque of the internal combustion engine and, depending on the operating state, determines the number of cylinders with which the internal combustion engine is operated,
- means which influence the number of cylinders during the changeover from one operating mode with a first number of cylinders number to an operating mode with a second number of cylinders,

characterized by

- charge control means (516-552, 600-620), which set the charge on the basis of the set point and the second number of cylinders (redsol), and
- ignition control means (736-750, 800-812), which determine the ignition angle (zwsol) as a function of the deviation of the set point (Misoll) from the current actual torque (Mind, Mieza), taking into account the set charge (Miopt) and the currently active number of cylinders (redst), for the purposes of regulating the actual value to the set point.

**Revendications**

**1.** Procédé de commande d'un moteur à combustion interne selon lequel :

- on prédétermine une valeur de consigne (Misoll) du couple du moteur à combustion interne,
- suivant l'état de fonctionnement, on prédétermine le nombre de cylindres actifs du moteur à combustion interne,
- au passage d'un mode de fonctionnement avec un premier nombre de cylindres à un mode de fonctionnement avec un second nombre de cylindres, on influence le nombre des cylindres,

caractérisé en ce qu'

- on règle le remplissage sur la base de la valeur de consigne et du second nombre de cylindres (redsol), et
- on définit l'angle d'allumage (zwsol) dépendant de la déviation entre le couple de consigne (Misoll) et le couple réel (Mind, Mieza), lui-même dépendant du remplissage actuel réglé (Miopt) et du nombre actuel de cylindres actifs (redst), dans le sens d'une régulation de la valeur réelle sur la valeur de consigne.

**2.** Procédé selon la revendication 1,
caractérisé en ce qu'
on définit le nombre de cylindres actuels (redneu) après indication de la déviation de la valeur de consigne (Misoll) par rapport à une valeur de couple (Mibase) tenant compte du réglage de remplissage actuel.

**3.** Procédé selon l'une quelconque des revendications 1 et 2,
caractérisé en ce que
lorsque le remplissage est établi, les cylindres choisis sont coupés l'un après l'autre et la correction de l'angle d'allumage est annulée pour les cylindres déclenchés, l'un après l'autre.

**4.** Procédé selon l'une quelconque des revendications précédentes,
caractérisé en ce que
la valeur de consigne est un couple de consigne prédéterminé par le conducteur, un remplissage de consigne, une charge de consigne ou une puissance de consigne.

**5.** Procédé selon l'une quelconque des revendications précédentes,
caractérisé en ce qu'
on détermine la. valeur de consigne par interpolation à partir d'une valeur maximale du couple ou pour le remplissage et d'une demande pour le ralenti pour le couple ou le remplissage.

**6.** Procédé selon l'une quelconque des revendications précédentes,
caractérisé en ce que
la valeur de consigne de remplissage ou la valeur du couple instantané se détermine par sélection à partir de la prédétermination de conduite et des fonctions complémentaires telles que la régulation anti-entraînement, la régulation du couple moteur pour une poussée inertielle, une action sur la boîte de vitesses, la régulation du ralenti et/ou par des fonctions de limitation de la vitesse de rotation, de la vitesse de déplacement, de la limitation de la charge et/ou du couple.

7. Dispositif de commande d'un moteur à combustion interne comprenant :

- un appareil de commande électronique (12) qui prédétermine une valeur de consigne (Misoll) pour le couple du moteur à combustion interne et suivant l'état de fonctionnement, il détermine le nombre de cylindres avec lesquels fonctionne le moteur,
- des moyens qui au passage d'un mode de fonctionnement avec un premier nombre de cylindres vers un mode de fonctionnement avec un second nombre de cylindres est influencé par le nombre de cylindres,

caractérisé par

- des moyens de commande de remplissage (516-552, 600-620) qui règle le remplissage sur la base de la valeur de consigne et du second nombre de cylindres (redsol) et
- des moyens de commande de l'angle d'allumage (736-750, 800-812), qui définissent l'angle d'allumage (zwsol) en fonction de la déviation entre la valeur de consigne (Misoll) et le couple moteur (Mind, Mieza) dépendant du remplissage, actuel réglé (Miopt) et du nombre actuel de cylindres actifs (redst) dans le sens d'une régulation de la valeur réelle sur la valeur de consigne.

# Fig. 1

EP 0 853 723 B1

# Fig. 2

EP 0 853 723 B1

Fig. 3

misoll (fa)

Fig. 4

tI soll (fa)

306

314

216

304

308

300

302

218

310

22

24

312

# Fig. 5

EP 0 853 723 B1

# Fig. 6

# Fig. 7

EP 0 853 723 B1

# Fig. 8

EP 0 853 723 B1

# Fig. 9

EP 0 853 723 B1